# FASCICULE DE BREVET EUROPEEN

(11) **EP 2 688 159 B1**
(45) Date de publication et mention de la délivrance du brevet: **08.11.2017**
(21) Numéro de dépôt: 13176440.9
(22) Date de dépôt: 15.07.2013
(51) Int. Cl.: H01S 3/067, H01S 3/13, H01S 3/23

(54) **Laser de puissance avec dispositif auto-adaptatif de mise en phase d'amplificateurs optiques fibrés**
Leistungsstarker Laser mit selbst angleichender Vorrichtung zur Synchronisierung von optischen Faserverstärkern
Power laser with self-adapting device for phasing fibre optical amplifiers

(30) Priorité: 20.07.2012 FR 1202064
(43) Date de publication de la demande: 22.01.2014
(73) Titulaire: Thales, 92400 Courbevoie (FR)
(72) Inventeur: Lallier, Eric, 94230 Cachan (FR)
(74) Mandataire: Esselin, Sophie

(56) Documents cités:
- EP-A1- 2 136 239
- EP-A2- 0 952 642
- EP-A2- 1 041 686
- US-A1- 2009 201 575
- BELLANGER C ET AL: "Coherent fiber combining by digital holography", OPTICS LETTERS, OSA, OPTICAL SOCIETY OF AMERICA, WASHINGTON, DC, US, vol. 33, no. 24, 15 décembre 2008 (2008-12-15), pages 2937-2939, XP001521056, ISSN: 0146-9592, DOI: 10.1364/OL.33.002937

## Description

Le domaine de l'invention est celui des sources laser de très forte puissance présentant une qualité de faisceau proche de la limite de diffraction. La montée en puissance des lasers à solides, et en particulier des lasers à fibres, constitue un enjeu majeur pour de nombreuses applications industrielles, scientifiques, et optroniques.

Dans bien des cas, il est aussi souhaitable que cette montée en puissance ne s'accompagne pas d'une dégradation de la qualité de faisceau et/ou de la cohérence temporelle de la source. La puissance émise par une fibre laser ou un amplificateur à fibre est en pratique limitée par l'apparition d'effets non-linéaires néfastes et/ou l'endommagement en raison de la faible dimension du mode guidé lorsque l'on cherche à garantir une émission monomode. En conséquence, et en dépit d'importants efforts technologiques consentis, la puissance maximale rapportée à ce jour est de l'ordre de 1 kW pour un amplificateur à fibre monomode cohérent.

Une solution à ce problème est la combinaison cohérente qui consiste à synchroniser en phase un grand nombre d'émetteurs laser indépendants ou un grand nombre d'amplificateurs en parallèle. On peut aboutir ainsi à une puissance multipliée par le nombre d'émetteurs avec la luminance associée à celle d'un seul émetteur. Ce concept connu depuis longtemps fait de nouveau l'objet d'un grand intérêt en raison du développement récent des lasers à fibres de puissance.

L'approche la plus courante consiste à utiliser un laser maître cohérent de faible puissance, à séparer son faisceau en N faisceaux (à l'aide de coupleurs à fibres), puis à amplifier chaque canal séparément à l'aide d'amplificateurs à fibres. Une partie du faisceau de sortie recombiné est extraite afin de procéder à une mesure de la phase relative de chaque fibre et de pouvoir appliquer un signal de correction sur des modulateurs de phase électro-optiques placés en amont de chaque canal d'amplification. On réalise de la sorte une pré-compensation de la phase via une boucle de contre-réaction. Le problème de cette approche dite « active » est que la mesure de la phase devient complexe lorsque le nombre de canaux augmente, or c'est généralement ce que l'on cherche. Il faut d'autre part pouvoir réaliser cette mesure, et les calculs qui s'en suivent, avec une fréquence de répétition suffisante pour couvrir le spectre des déphasages d'origine thermique ou vibratoire (quelques 100 Hz). Finalement, cette méthode suppose de disposer d'un grand nombre de modulateurs de phase électro-optiques qui restent des objets relativement coûteux.

Une solution plus originale a récemment été proposée par le Demandeur et fait l'objet d'un dépôt d'une demande de brevet FR 2932929.

Elle propose notamment un dispositif auto-adaptatif permettant de s'affranchir à la fois de la mesure de la phase, des calculs nécessaires à la contre-réaction, et des modulateurs de phase. Elle repose sur le principe suivant : la phase relative de chaque fibre amplificatrice est sondée à l'aide d'un laser de référence (issu du laser maître par exemple), et enregistrée à l'aide d'un hologramme numérique sur un capteur matriciel de type CCD. L'hologramme numérique est retranscrit sur un modulateur spatial de lumière matriciel de type LCOS (cristaux liquides), qui est utilisé pour diffracter dans l'ordre -1 l'onde signal en amont de l'amplificateur. Cette onde diffractée est la conjuguée en phase de l'onde sonde transmise de sorte que le signal amplifié en sortie des fibres amplificatrices est automatiquement en phase. Ce procédé est par ailleurs compatible d'un grand nombre de canaux (N>100) et d'une bande passante supérieure à 100 Hz.

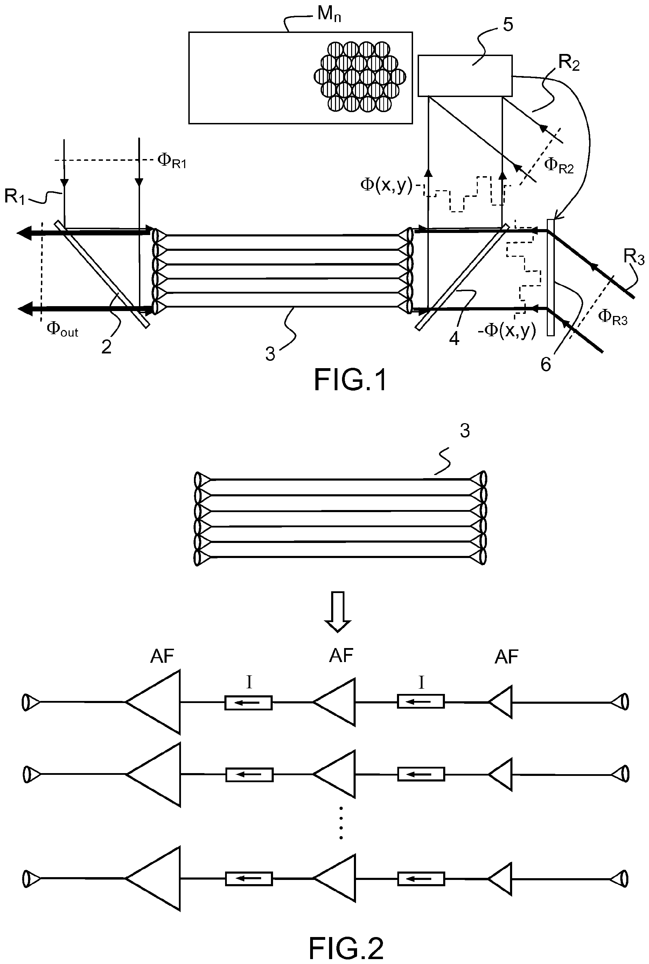

La figure 1 illustre ce principe et met en évidence l'utilisation de trois faisceaux de référence avec un front d'onde plan R₁, R₂, et R₃, qui peuvent d'ailleurs être issus d'un même laser cohérent. Le faisceau R₃ est le faisceau signal qui doit être amplifié. Le faisceau R₁ est le faisceau qui sert à sonder via une lame séparatrice 2, la variation de phase relative entre les fibres amplificatrices 3. Le faisceau R₂ sert de référence plane pour interférer avec la sortie du faisceau R₁ au travers d'une seconde lame séparatrice 4, et enregistrer un réseau de franges sur une caméra 5. L'hologramme numérique Hₙ ainsi enregistré est transposé au modulateur spatial de lumière (SLM) 6 qui diffracte le faisceau R₃ dans l'ordre -1 (avec un angle - θ si l'hologramme a été enregistré avec un angle θ). Cet ordre de diffraction permet de générer une onde conjuguée en phase, i.e., la loi de phase du front d'onde du faisceau R₃ après diffraction est - ϕ(x,y) si la phase du faisceau sonde R₁ est ϕ (x,y) en sortie du réseau de fibres. On réalise ainsi une pré compensation de la distorsion de phase du faisceau R₃ à amplifier qui permet d'obtenir en sortie un front d'onde plan ϕₒᵤₜ.

Une limitation majeure de cette solution vient du fait que la sonde et le signal sont propagés en sens contraire. Or, dans les systèmes d'amplification à fibres de forte puissance, un canal d'amplification est toujours constitué de plusieurs étages d'amplification mis en cascade et isolés optiquement. La figure 2 illustre à cet effet, des chaînes d'amplifications mises en parallèle et comportant chacune un ensemble d'amplificateurs AF séparés par des isolateurs I.

Cette cascade d'amplificateurs permet d'adapter les caractéristiques des fibres 3 de chaque étage à la puissance du signal à amplifier et permet surtout de prévenir une auto-oscillation et un endommagement de la chaîne d'amplification dans la mesure où le gain total de la chaîne peut être considérable (> 50 dB). Dans ces conditions, la méthode présentée précédemment n'est pas applicable car la sonde ne peut pas être transmise à travers les isolateurs optiques. D'autre part, il n'est pas non plus possible de propager la sonde dans le même sens que le signal car il serait alors impossible de distinguer la sonde du signal après le prélèvement en sortie. En définitive, le procédé peut uniquement être implémenté dans les systèmes comportant un seul étage d'amplification ou entre l'avant dernier et le dernier étage. Cette option n'est pas souhaitable en raison des pertes du modulateur spatial et de sa faible tenue au flux.

Pour résoudre le problème pré-cité, l'invention a pour objet un dispositif laser intégrant un dispositif auto-adaptatif intégrant la co-propagation de la sonde et du signal et non plus la contre-propagation entre la sonde et le signal comme décrit dans la précédente demande de brevet FR 2932929, du Demandeur, en modifiant les propriétés du faisceau sonde afin qu'il puisse être co-propagé avec le signal, puis différencié du signal après prélèvement à la sortie de l'amplificateur.

Cette solution est basée sur une différenciation spectrale. L'avantage principal est qu'il est dès lors possible de concilier cette technique auto-adaptative de mise en phase avec les architectures en cascade d'amplificateurs à fibres couramment utilisées pour atteindre des puissances importantes par canal. Un autre avantage est que la pré-compensation de phase du signal peut être réalisée à très faible puissance optique en amont de la chaîne d'amplification optique, ce qui minimise les contraintes sur l'efficacité de diffraction et la tenue au flux du modulateur spatial.

Plus précisément la présente invention a pour objet un dispositif laser comportant un laser délivrant un faisceau porteur d'une onde signal de fréquence centrale f₀, et un ensemble de fibres amplificatrices délivrant un ensemble d'ondes optiques alimenté par ladite onde signal caractérisé en ce qu'il comporte :
- des moyens pour séparer le faisceau porteur de l'onde signal en un faisceau sonde initial et un faisceau signal ;
- des moyens pour décaler la fréquence optique du faisceau sonde initial de part et d'autre de la fréquence centrale f₀, et différencier ladite fréquence de celle du faisceau dit signal, générant un faisceau sonde de fréquence décalée ;
- des moyens pour créer un faisceau de référence à partir du faisceau sonde ;
- des moyens pour co-propager dans lesdites fibres amplificatrices, le faisceau sonde et le faisceau signal ;
- des moyens pour faire interférer en sortie de l'ensemble des fibres amplificatrices, le faisceau sonde et le faisceau de référence de manière à définir un interférogramme ;
- un détecteur matriciel capable de générer un hologramme numérique à partir dudit interférogramme ;
- un modulateur spatial de phase alimenté par ledit hologramme numérique pour diffracter dans l'ordre -1 le faisceau dit signal en entrée de l'ensemble des fibres amplificatrices, ledit modulateur spatial présentant des caractéristiques de taux de rafraîchissement de loi de phase.

Selon une variante de l'invention, les moyens pour décaler la fréquence comprennent un modulateur d'intensité de type interféromètre de Mach-Zehnder, générant principalement deux fréquences f₀-fₘ et f₀+fₘ, équi-distantes de la fréquence f₀.

Selon une variante de l'invention, la fréquence de modulation dudit modulateur est de l'ordre de quelques dizaines de GHz.

Selon une variante de l'invention, le dispositif comprend au moins un filtre optique en sortie desdits moyens de décalage de fréquence, de manière à supprimer la fréquence f₀.

Selon une variante de l'invention, le dispositif comprend également un filtre optique pour éliminer la fréquence f₀, situé entre la sortie des fibres amplificatrices et le détecteur matriciel.

Selon une variante de l'invention, ledit filtre est un filtre optique de type Fabry-Perot.

Selon une variante de l'invention, les moyens pour faire interférer le faisceau de référence et les faisceaux en sortie desdites fibres de manière à définir un interférogramme comprennent deux lames séparatrices.

Selon une variante de l'invention, ledit détecteur matriciel capable de générer un hologramme numérique à partir dudit interférogramme est une matrice de type CCD (Charge-Coupled Device) ou CMOS (Complementary Metal Oxide Semiconductor).

Selon une variante de l'invention, le modulateur spatial de phase est un dispositif à cristal liquide LCD.

Selon une variante de l'invention, le modulateur spatial de phase comprend des composants correspondant à des microsystèmes opto-électromécaniques appelés MOEMS (pour l'acronyme de Micro-Opto-Electro-Mechanical Systems).

Selon une variante de l'invention, les fibres sont couplées à des lentilles de collimation.

L'invention sera mieux comprise et d'autres avantages apparaîtront à la lecture de la description qui va suivre à titre non limitatif et grâce aux figures annexées parmi lesquelles :
- la figure 1 schématise un dispositif laser de puissance avec un dispositif auto-adaptatif de l'art antérieur ;
- la figure 2 illustre une chaîne d'amplification à fibre utilisée dans des dispositifs laser de puissance selon l'art connu
- la figure 3 illustre un dispositif laser de puissance intégrant un dispositif auto-adaptatif selon la présente invention.

Selon la présente invention, il est proposé de réaliser une différentiation spectrale entre un faisceau sonde et un faisceau signal.

Dans ce cas, le faisceau sonde est directement introduit dans les N canaux d'amplificateurs à fibre, alors que le signal est d'abord diffracté avant d'être couplé dans les N canaux d'amplificateurs.

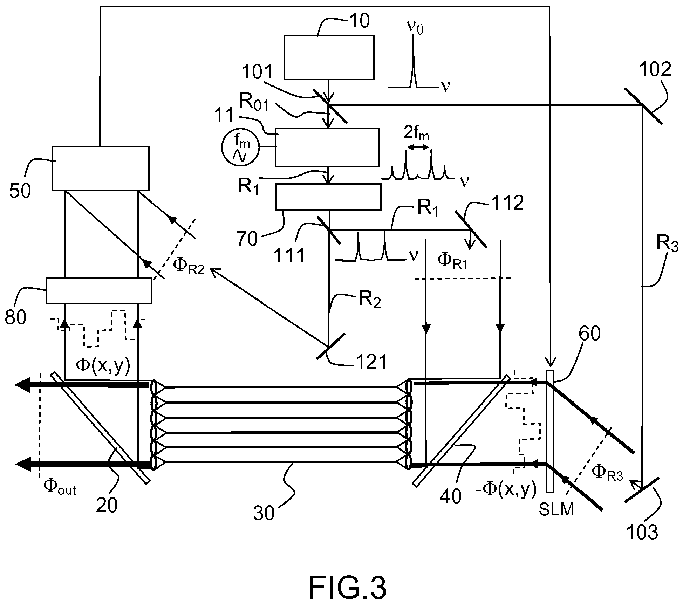

La figure 3 illustre plus précisément, un exemple de dispositif de l'invention dans lequel, la solution de la présente invention consiste à partir d'un laser maître 10, d'abord à séparer via des moyens 101, le signal issu de l'oscillateur maître en un faisceau initial sonde R₀₁ de porteuse en fréquence f₀, et en un faisceau signal R₃.

Le faisceau sonde initial R₀₁ est introduit dans des moyens 11, permettant de décaler ladite fréquence du faisceau signal R₀₁ de part d'autre de la porteuse optique, une telle opération peut être avantageusement réalisée à l'aide d'un modulateur d'intensité de type Mach-Zehnder opérant autour d'un déphasage de π. Dans ce cas, la fréquence optique du faisceau sonde R₁, est essentiellement constituée de bandes latérales symétriques par rapport à la fréquence f₀ du signal et séparées de celle-ci par la fréquence de modulation fₘ.

On peut ajouter si besoin, un ou plusieurs filtres optiques 70 (étalon d'intervalle spectral libre 2fₘ) permettant d'éliminer complètement la fréquence centrale f₀ résiduelle. On peut par exemple utiliser une fréquence de modulation de 25 GHz à l'aide d'un modulateur standard de type télécom et utiliser des filtres étalons WDM standards télécom de type 50 GHz.

D'autres types de filtres existants et adaptés sont les réseaux de Bragg photo-inscrits dans les fibres associés à des circulateurs optiques, et les réseaux holographiques.

On peut aussi utiliser un modulateur de phase suivi d'un ou de plusieurs étalons. Le modulateur de phase crée les bandes latérales sans atténuer la porteuse.

Le faisceau sonde R₁ est couplé dans le réseau de fibres amplificatrices via des moyens optiques 112 et 40.

Le faisceau signal R₃ est acheminé via des moyens de type miroirs de renvoi 102, 103, en direction d'un modulateur de phase 60, de type LCD et est couplé dans le réseau de fibres via une lame séparatrice.

Il est prévu des moyens 111 et 121 pour prélever et faire interférer un faisceau de référence R₂ issu du faisceau R₁, ledit faisceau R₂ interférant avec le faisceau sonde en sortie des fibres amplificatrices 30.

Après amplification, une faible quantité du signal de sortie est prélevée à l'aide par exemple d'une lame séparatrice 20, en direction des moyens de détection 50, après interférence avec le faisceau de référence R₂ et passage au travers du filtre 80.

D'une façon générale, le spectre de la sonde peut être facilement réduit à des bande latérales proches de la fréquence signal et disposées de façon symétrique par rapport à celle-ci, de sorte que l'indice optique vu par la sonde est le même que celui vu par le signal au premier ordre. Il en résulte que le déphasage vu par la sonde ou le signal est le même.

En sortie, et après prélèvement d'une faible partie du faisceau amplifié, on peut isoler la sonde du signal en utilisant des filtres spectraux 80, du même type que ceux mentionnés précédemment. La partie non en phase du faisceau amplifié peut être là aussi rendue négligeable en réglant le niveau d'entrée de la sonde par rapport à celui du signal diffracté incident.

Selon la présente invention, de même que dans la demande de brevet précédente du Demandeur, la phase relative entre fibres est détectée par interférence et le résultat de ces interférences est un réseau de franges de même pas et dont la phase relative vaut ϕi (x), recueilli par la matrice de détection puis envoyé sur le modulateur de phase.

Le positionnement des franges traduit le déphasage entre les fibres. Si ces phases évoluent en raison d'effets dits « lents » par exemple de température, de contraintes, bruit acoustique,...., les interférences peuvent périodiquement être détectées en temps réel.

Il est à noter que l'angle entre la direction du faisceau sonde et celle du faisceau signal qui interférent, est avantageusement faible (typiquement inférieur à 1 degré) de manière à détecter chaque période spatiale avec un grand nombre de pixels.

## Revendications

1. Dispositif laser comportant un laser (10) délivrant un faisceau porteur d'une onde signal de fréquence centrale f₀, et un ensemble de fibres amplificatrices (30) délivrant un ensemble d'ondes optiques alimenté par ladite onde signal **caractérisé en ce qu'**il comporte :
- des moyens (101) pour séparer le faisceau porteur de l'onde signal en un faisceau sonde initial (R₀₁) et un faisceau signal (R₃) ;
- des moyens (11) pour décaler la fréquence optique du faisceau sonde initial (R₀₁) de part et d'autre de la fréquence centrale f₀, et différencier ladite fréquence de celle du faisceau dit signal (R₃), générant un faisceau sonde signal (R₁) de fréquence décalée ;
- des moyens pour créer un faisceau de référence (R₂) à partir du faisceau sonde (R₁) ;
- des moyens pour co-propager dans lesdites fibres amplificatrices, le faisceau sonde (R₁) et le faisceau signal (R₃);
- des moyens pour faire interférer en sortie de l'ensemble des fibres amplificatrices, le faisceau sonde (R₁) et le faisceau de référence (R₂) de manière à définir un interférogramme ;
- un détecteur matriciel (50) capable de générer un hologramme numérique à partir dudit interférogramme ;
- un modulateur spatial de phase (60) alimenté par ledit hologramme numérique pour diffracter dans l'ordre -1, le faisceau dit signal (R₃) en entrée de l'ensemble des fibres amplificatrices, ledit modulateur spatial présentant des caractéristiques de taux de rafraîchissement de loi de phase.

2. Dispositif laser selon la revendication 1, **caractérisé en ce que** les moyens (11) pour décaler la fréquence comprennent un modulateur d'intensité de type interféromètre de Mach-Zehnder, générant principalement deux fréquences f₀-fₘ et f₀+fₘ équi-distantes de la fréquence f₀.

3. Dispositif laser selon la revendication 2, **caractérisé en ce que** la fréquence de modulation dudit modulateur est de l'ordre de quelques dizaines de GHz.

4. Dispositif laser selon l'une des revendications 1 à 3, **caractérisé en ce qu'**il comprend un ou plusieurs filtres optiques (70) en sortie desdits moyens de décalage de fréquence de manière à supprimer la fréquence f₀.

5. Dispositif laser selon l'une des revendications 1 à 4, **caractérisé en ce qu'**il comprend un filtre optique (80) situé entre la sortie des fibres amplificatrices et le détecteur matriciel, de manière à supprimer la fréquence f₀.

6. Dispositif laser selon l'une des revendications 4 ou 5, **caractérisé en ce que** ledit filtre est un filtre optique de type Fabry-Perot.

7. Dispositif laser selon l'une des revendications 4 ou 5, **caractérisé en ce que** ledit filtre comprend des réseaux de Bragg photo-inscrits dans les fibres associés à des circulateurs optiques.

8. Dispositif laser selon l'une des revendications 4 ou 5, **caractérisé en ce que** ledit filtre comprend un réseau holographique.

9. Dispositif laser selon l'une des revendications 1 à 8, **caractérisé en ce que** les moyens pour faire interférer le faisceau de référence (R₂) et les faisceaux en sortie desdites fibres de manière à définir un interférogramme comprennent deux lames séparatrices.

10. Dispositif laser selon l'une des revendications 1 à 9, **caractérisé en ce que** ledit détecteur matriciel capable de générer un hologramme numérique à partir dudit interférogramme est une matrice de type CCD ou CMOS.

11. Dispositif laser selon l'une des revendications 1 à 10, **caractérisé en ce que** le modulateur spatial de phase est un dispositif à cristal liquide LCD.

12. Dispositif laser selon l'une des revendications 1 à 10, **caractérisé en ce que** le modulateur spatial de phase comprend des composants MOEMS.

13. Dispositif laser selon l'une des revendications 1 à 11, **caractérisé en ce que** les fibres sont couplées à des lentilles de collimation.

## Patentansprüche

1. Laservorrichtung, umfassend einen Laser (10), der einen Trägerstrahl einer Signalwelle mittlerer Frequenz f₀ ausgibt, und eine Verstärkungsfasereinheit (30), die eine optische Welleneinheit ausgibt, die durch die Signalwelle versorgt wird, **dadurch gekennzeichnet, dass** sie umfasst:
- Mittel (101) zum Trennen des Trägerstrahls der Signalwelle in einen anfänglichen Abtaststrahl (R₀₁) und in einen Signalstrahl (R₃);
- Mittel (11) zum Verschieben der optischen Frequenz des anfänglichen Abtaststrahls (R₀₁) auf beiden Seiten der mittleren Frequenz f₀, und Differenzieren der Frequenz von der des als Signalstrahl (R₃) bezeichneten Strahls, wodurch ein Signalabtaststrahl (R₁) mit verschobener Frequenz erzeugt wird;
- Mittel zum Erzeugen eines Referenzstrahls (R₂) anhand des Abtaststrahls (R₁);
- Mittel zum gemeinsamen Ausbreiten des Abtaststrahls (R₁) und des Signalstrahls (R₃) in den Verstärkungsfasern;
- Mittel zum Interferieren des Abtaststrahls (R₁) und des Referenzstrahls (R₂) am Ausgang der Verstärkungsfasereinheit, um ein Interferogramm zu definieren;
- einen Matrizendetektor (50), der in der Lage ist, ein digitales Hologramm anhand des Interferogramms zu erzeugen;
- einen räumlichen Phasenmodulator (60), der durch das digitale Hologramm versorgt wird, um den so genannten Signalstrahl (R₃) am Eingang der Verstärkungsfasereinheit in der Ordnung -1 zu beugen, wobei der räumliche Modulator Auffrischungsraten-Merkmale des Phasengesetzes aufweist.

2. Laservorrichtung nach Anspruch 1, **dadurch gekennzeichnet, dass** die Mittel (11) zum Verschieben der Frequenz einen Intensitätsmodulator vom Typ Mach-Zehnder-Interferometer umfassen, der hauptsächlich zwei Frequenzen f₀-fₘ und f₀+fₘ erzeugt, die abstandsgleich von der Frequenz f₀ sind.

3. Laservorrichtung nach Anspruch 2, **dadurch gekennzeichnet, dass** die Modulationsfrequenz des Modulators ungefähr einige GHz-Zehnereinheiten ist.

4. Laservorrichtung nach einem der Ansprüche 1 bis 3, **dadurch gekennzeichnet, dass** sie einen oder mehrere optische Filter (70) am Ausgang der Mittel zum Verschieben der Frequenz umfasst, um die Frequenz f₀ zu unterdrücken.

5. Laservorrichtung nach einem der Ansprüche 1 bis 4, **dadurch gekennzeichnet, dass** sie einen optischen Filter (80) zwischen dem Ausgang der Verstärkungsfasern und dem Matrizendetektor umfasst, um die Frequenz f₀ zu unterdrücken.

6. Laservorrichtung nach einem der Ansprüche 4 oder 5, **dadurch gekennzeichnet, dass** der Filter ein optischer Filter vom Typ Fabry-Perot ist.

7. Laservorrichtung nach einem der Ansprüche 4 oder 5, **dadurch gekennzeichnet, dass** der Filter Bragg-Netze umfasst, die in den Fasern, die mit den optischen Zirkulatoren assoziiert sind, lichtgeschrieben sind.

8. Laservorrichtung nach einem der Ansprüche 4 oder 5, **dadurch gekennzeichnet, dass** der Filter ein holografisches Netz umfasst.

9. Laservorrichtung nach einem der Ansprüche 1 bis 8, **dadurch gekennzeichnet, dass** die Mittel zum Interferieren des Referenzstrahls (R₂) und der Strahlen am Ausgang der Fasern, um ein Interferogramm zu definieren, zwei Strahlteiler umfassen.

10. Laservorrichtung nach einem der Ansprüche 1 bis 9, **dadurch gekennzeichnet, dass** der Matrizendetektor, der in der Lage ist, ein digitales Hologramm anhand des Interferogramms zu erzeugen, eine Matrize vom Typ CCD oder CMOS ist.

11. Laservorrichtung nach einem der Ansprüche 1 bis 10, **dadurch gekennzeichnet, dass** der räumliche Modulator eine Flüssigkristall-LCD-Vorrichtung ist.

12. Laservorrichtung nach einem der Ansprüche 1 bis 10, **dadurch gekennzeichnet, dass** der räumliche Phasenmodulator MOEMS-Komponenten umfasst.

13. Laservorrichtung nach einem der Ansprüche 1 bis 11, **dadurch gekennzeichnet, dass** die Fasern mit Kollimationslinsen gekoppelt sind.

## Claims

1. Laser device comprising a laser (10) which delivers a carrier beam of a central frequency signal wave f₀, and an assembly of amplifying fibres (30) which delivers an assembly of optical waves which are supplied by the signal wave, **characterised in that** it comprises:
- means (101) for separating the carrier beam of the signal wave into an initial sensor beam (R₀₁) and a signal beam (R₃);
- means (11) for offsetting the optical frequency of the initial sensor beam (R₀₁) at one side and the other of the central frequency f₀, and differentiating the frequency from that of the beam referred to as the signal beam (R₃) which generates a signal sensor beam (R₁) of offset frequency;
- means for creating a reference beam (R₂) from the sensor beam (R₁);
- means for co-propagating the sensor beam (R₁) and the signal beam (R₃) in the amplifying fibres;
- means for bringing about at the output of the assembly of amplifying fibres interference of the sensor beam (R₁) and the reference beam (R₂) in order to define an interferogram;
- a matrix detector (50) which is capable of generating a digital hologram from the interferogram;
- a spatial phase modulator (60) which is supplied by the digital hologram in order to diffract in the order -1 the beam referred to as the signal beam (R₃) at the input of the assembly of the amplifying fibres, the spatial modulator having phase law refreshment rate characteristics.

2. Laser device according to claim 1, **characterised in that** the means (11) for offsetting the frequency comprise an intensity modulator of the Mach-Zehnder interferometer type, principally generating two frequencies f₀-fₘ and f₀+fₘ which are equidistant from the frequency f₀.

3. Laser device according to claim 2, **characterised in that** the modulation frequency of the modulator is in the order of some tens of GHz.

4. Laser device according to any one of claims 1 to 3, **characterised in that** it comprises one or more optical filters (70) at the output of the means for offsetting frequency in order to eliminate the frequency f₀.

5. Laser device according to any one of claims 1 to 4, **characterised in that** it comprises an optical filter (80) which is located between the output of the amplifying fibres and the matrix detector in order to eliminate the frequency f₀.

6. Laser device according to either claim 4 or claim 5, **characterised in that** the filter is an optical filter of the Fabry-Perot type.

7. Laser device according to either claim 4 or claim 5, **characterised in that** the filter comprises Bragg networks which are photo-inscribed in the fibres associated with optical circulators.

8. Laser device according to either claim 4 or claim 5, **characterised in that** the filter comprises a holographic network.

9. Laser device according to any one of claims 1 to 8, **characterised in that** the means for bringing about interference of the reference beam (R₂) and the beams at the output of the fibres in order to define an interferogram comprise two separating plates.

10. Laser device according to any one of claims 1 to 9, **characterised in that** the matrix detector capable of generating a digital hologram from the interferogram is a matrix of the CCD or CMOS type.

11. Laser device according to any one of claims 1 to 10, **characterised in that** the spatial phase modulator is a liquid crystal device LCD.

12. Laser device according to any one of claims 1 to 10, **characterised in that** the spatial phase modulator comprises MOEMS components.

13. Laser device according to any one of claims 1 to 11, **characterised in that** the fibres are coupled to collimation lenses.
